# EUROPEAN PATENT SPECIFICATION

(11) **EP 2 124 619 B1**
(45) Date of publication and mention of the grant of the patent: **05.06.2013**
(21) Application number: 08708167.5
(22) Date of filing: 24.01.2008
(51) Int. Cl.: A23G 1/52, A23L 1/00, A21D 13/00

(54) **MOUSSE**
MOUSSE
MOUSSE

(30) Priority: 25.01.2007 EP 07101146
(43) Date of publication of application: 02.12.2009
(73) Proprietor: Nestec S.A., 1800 Vevey (CH)
(72) Inventor: MOR, Aline, Lucena, SP CEP-04738-002 (BR); OTON SANCHEZ, Eugenia, 20251 Hamburg (DE); FIAUX, Thierry, 1804 Corsier sur Vevey (CH); RUET, Delphine, Claude, E-39012 Santander (ES); HARGREAVES, Jeremy, Michael, CH-1820 Montreux (CH)
(86) International application number: PCT/EP2008/050828
(87) International publication number: WO 2008/090203

(56) References cited:
- WO-A-02/071861
- WO-A-2006/067064
- US-A- 4 818 554
- US-A- 5 962 059
- DATABASE WPI Week 200427 Derwent Publications Ltd., London, GB; AN 2004-289503 XP002439073 & JP 2004 105031 A (LOTTE CHILSUNG BEVERAGE CO LTD) 8 April 2004 (2004-04-08)

## Description

### Field of the Invention

The present invention relates to a mousse, more particularly to a shelf-stable mousse, i.e. a mousse which does not need to be stored in a refrigerated environment, typically at room temperature up to about 25°C, and to a confectionery product comprising such a shelf-stable mousse.

### Background of the Invention

In its simplest form, traditional mousse au chocolat prepared in the home is made by melting chocolate and folding it into egg whites that have been whipped. Butter and/or cream and/or egg yolks may be used with the chocolate in some recipes. The mousse is then cooled. Traditional mousse au chocolat has a characteristic thermal and visco-elastic behaviour such as a spongy texture associated with spoonability, rapid melting in the mouth, and an aerated structure. A disadvantage of a traditional mousse au chocolat (e.g. home made) is that it does not lead to the most attractive product when it is used as a filling for a chocolate shell because the traditional mousse has so little firmness that it can hardly be distinguished from the chocolate shell. Moreover, traditional mousse au chocolat is not shelf-stable and requires to be chilled or refrigerated for preservation. Mousse au chocolat is also industrially produced, e.g. "Secret de Mousse" la Laitiere (Nestle) and this product also requires chilling.

Shelf-stable confectionery products described as mousse or mousse au chocolat are known on the market but they do not have a texture that matches traditional mousse au chocolat. There are two types of mousses on the market
1) Fat-continuous systems, and
2) Water-continuous systems

A fat-continuous mousse ( for example, *camille Bloch Mousse Chocolat*) differs from traditional mousse au chocolat because it lacks the light tender spongy texture which is associated with spoonability. In the mouth, the fat-continuous mousse is initially non-deformable until it melts at mouth temperature. The fat-continuous mousse breaks down in the mouth more slowly and gives a fattier mouth feel than real mousse au chocolat.

Traditional mousse au chocolat is itself a water continuous mousse and so shelf stable water-continuous mousses are more similar to traditional mousse au chocolat with regard to thermal and visco-elastic behaviour. However, in order to achieve shelf-stability, the amount of water in the formulation must be reduced and/or the use of a preservative is necessary. Until now, reducing the amount of water to a level where the mousse remains stable (for example *Cadbury Dairy Milk Mousse with Bourneville -* as sold in South Africa) produces a mousse with a dry mouth-feel and higher viscoelastic modulii (at room temperature) compared with traditional mousse au chocolat (at fridge temperature).

Shelf-stable materials calling themselves mousses differ from traditional or industrially produced refrigerated mousses in their elastic behaviour. The elastic behaviour is represented by the storage modulus (G') and is greater than 50,000 Pa at 20°C for shelf-stable mousses but less than 50,000 Pa for traditional and refrigerated mousses at 5°C (20°C and 5°C being their respective temperatures of consumption).

JP-A-2004-105031 discloses a jellylike food and drink comprising a gelling agent.

WO-A-2006/067064 describes a shelf-stable mousse.

### Summary of the Present Invention

We have found, surprisingly, that a shelf-stable mousse which is an aerated oil-in-water emulsion and having a storage modulus (G') of less than 10,000 Pa at 20°C has a mouth-feel similar to traditional mousse au chocolat. Even more surprising, we have found that shelf-stability may be achieved without the need for a preservative in the mousse.

Accordingly, the present invention provides a shelf-stable mousse comprising an aerated oil-in-water emulsion characterised in that the weight ratio of oil phase to water phase varies from 25:75 to 60:40, and the mousse has a storage modulus at 20°C of less than 10,000Pa.

### Detailed Description of the Invention

The shelf-stable mousse comprises, apart from air, two main elements, the oil phase and the water phase. The ratio of oil phase:water phase is from 25:75 to 60:40, preferably from 30:70 to 55:45, more preferably from 40:60 to 50:50.

In any case the oil phase is greater than 2% by weight of the total ingredients content of the shelf-stable mousse.

The oil phase and the water phase are usually prepared separately before mixing to obtain the oil-in-water emulsion. However, care should be taken not to mix the phases too quickly otherwise there may be a risk of phase inversion from oil-in-water to water-in-oil or even a non-dispersed state.It may also be possible to mix all the ingredients together but there is a risk that an emulsion may not be created especially with a high ratio of oil phase to water phase.

It should be understood that transfers of ingredients may take place between the oil phase and the water phase after manufacture. For example, the cocoa powder is likely to move to the water phase.

The oil phase may consist of 100% by weight of fat, using an appropriate fat to obtain the desired texture. However, for a chocolate flavoured mousse, the oil phase typically contains a mixture of soft fat, plain chocolate and cocoa powder. The mixture conveniently contains from 35-50% by weight of soft fat, from 20-50% by weight of plain chocolate and from 0-30% by weight of cocoa powder. A soft fat should be understood in this invention to be a fat that has less than 25% solids at 20°C.

If desired, for a chocolate flavoured mousse the oil phase may contain the constituents of chocolate (including lecithin).

For other flavoured mousses, the oil phase may contain a suitable fat or fat blend with other solid material such as milk powder, or fruit powder, or for a nut flavoured mousse, the oil phase may contain ground nuts and/or pieces of nut as well as, optionally, chocolate. The oil phase may also optionally contain surfactant.

The water phase may comprise a sugar or sugar alcohol or any mixture of two or more thereof together with one or more surfactants and water. It should be understood that it would be possible to have some or all the sugars or sugar alcohols as crystalline material in the fat phase whereupon, on mixing the fat phase with the water phase, the sugar or sugar alcohol in the fat phase would dissolve into the water phase.

The mixture of sugars and/or sugar alcohols is chosen to provide bulk, a reduction in water activity and an appropriate viscosity as well as serving as sweeteners. There is a spectrum of materials which can be used for this purpose, but broadly speaking smaller molecules such as monosaccharides and small sugar alcohols are more effective at reducing the water activity and make a lower contribution to viscosity than the larger molecular weight materials such as higher polymers of glucose found in low dextrose equivalent (DE) corn syrups. Suitable mixtures of sugars and sugar alcohols can comprise corn syrup, sucrose, maltitol syrup, polydextrose, dextrins, inulin, sorbitol, glycerol, fructose and dextrose.

The surfactant may comprise a protein or protein derived material such as whey protein, egg white, casein hydrolysate or mixtures of these, a protein-containing food material such as skimmed milk powder, sucrose esters of fatty acids, citric acid esters of monoglycerides, diacetyl tartaric acid esters of monoglycerides, polysorbates, lactic acid esters of monoglycerides, propylene glycol, propylene glycol esters of fatty acids either alone or any combination of two or more thereof.

Although the surfactant is normally present in the water phase, it should be understood that it would be possible to have some or all of the surfactant in the oil phase whereupon, on mixing the fat phase with the water phase, an emulsion would be formed.

The amounts of the components of the water phase (by weight based on the weight of the water phase) may be, for example,

| | |
|---|---|
| surfactant | 0.2-30%, preferably 4 - 20% |
| Sugar alcohol | 0-40%, preferably 10 - 30% |
| Sugar | 0-70%,preferably 15 - 60% |
| added water | 1- 30%,preferably 5-17% |

A typical formulation for the water phase may contain the following ingredients:

| | | |
|---|---|---|
| Surfactant | | |
| | skimmed milk powder | 4 - 20 % |
| | sucrose ester | 0.2 - 0.6 % |
| Sugar alcohol | | |
| | sorbitol | 10 - 20 % |
| Sugar | | |
| | sucrose | 5 - 30 % |
| | 63 DE Corn syrup | 10 - 40 % |
| Added water | | 5 - 17 % |

Optionally, flavourings or salt can be added to the water phase. The flavouring may be, for example, strawberry, raspberry, orange, lemon, mint, coffee, etc. but is preferably chocolate.

The shelf-stable mousse may be prepared a process according to claim 17. Preferably the oil phase and the water phase are prepared separately, the water phase is heated to a temperature above 85°C for pasteurisation, and the oil phase is heated to above the melting temperature of the fat, i.e. to about 40-60°C. Both phases are then cooled to below 40°C, preferably below 35°C, before adding the oil phase to the water phase at a rate that allows sufficient time and with sufficient agitation to form an emulsion, and aerating the emulsion. Generally any ingredient which presents a microbial risk is included in the water phase as this receives heat treatment. It should be understood that components originating in one phase may move to the other phase once the phases are mixed, especially if they are soluble in that phase, e.g. sugars or sugar alcohols as mentioned above. Therefore, it should be understood that the proportions of the components indicated in the oil phase and the water phase in this invention refer to the proportions in the original oil phase and the water phase before they have been mixed with one another.

After the emulsion has formed, it is held in a vessel with stirring, advantageously using a gate-arm mixer and then fed to an aeration system to form the mousse. Aeration is carried out by injecting a gas which does not react with the ingredients of the emulsion as it flows through the emulsion. The gas flow is increased or decreased relative to the material flow rate to achieve the desired density. The aeration may be carried out by using any of several known continuous aeration equipments, for example, a Mondomix machine or the aeration and depositing system described in WO200506303. In a batch process, whipping could be used, possibly under pressure as in a Morton pressure whisk.

Any gas commonly used for aerating confectionery could be used, for example, air, nitrogen, carbon dioxide or nitrous oxide.

The density of the shelf-stable mousse is about 0.4 to 1.2 g/cm³, preferably 0.6 to 1.0 g/cm³, more preferably 0.8 to 0.9g/cm³.

The shelf-stable mousse preferably has a water activity (Aw) of less than 0.67 and may be as low as 0.27.

Advantageously, the shelf-stable mousse contains no preservative.

The mousse may have any desirable flavour, e.g. fruit, mint, caramel, hazelnut, coffee, etc. but preferably chocolate.

The shelf-stable mousse of the present invention has a light tender texture and when it contains chocolate or chocolate flavour it provides an intense chocolate mousse flavour release very similar to traditional mousse au chocolat.

The shelf-stable mousse of the present invention is firmer than a traditional mousse au chocolat. The firmness is measured by a texture analyser. The instrument used is a Stable Micro Systems TA-XTplus. The measurement is a penetration using a 5mm diameter cylinder probe (Stable Micro Systems P/5), to a depth of 12mm after triggering. The force in compression is measured throughout. The main set-up parameters are
o mode: measure force in compression
○ option: return to start
o pre-test speed: 1.0 mm s⁻¹
o test speed 2.0 mm s⁻¹
o post-test speed: 2.0 mm s⁻¹
o distance: 12 mm
o trigger type: auto : 0.2 g
o data acquisition rate: 200 pps
o form of sample: Mousse put into 26ml pots.

The calculated parameters are the maximum force (N) and the area under the curve on penetration (Ns).

For example, a home-made mousse has a firmness measured by a maximum penetration force of only 0.05N. The penetration force of the shelf-stable mousse of the present invention is advantageously at least 0.2N, preferably at least 0.3N, more preferably at least 0.4N, and most preferably at least 0.5N.

Compared to a fat-continuous mousse (water-in-oil emulsion), the shelf-stable mousse of the present invention is foamier, softer, moister, less dense, less powdery, and visually more aerated.

The shelf-stable mousse of the present invention may be used as a component of a confectionery product.

The confectionery product may be chocolate, cake or biscuits. For example, the confectionery product may be a chocolate tablet or an individual chocolate sweet such as in an assortment or a "straightline" (which is like an assortment except that all the sweets are the same). By chocolate we mean dark, milk or white chocolate or compound chocolate also known as couverture.

Accordingly, the present invention also provides a confectionery material having a filling of a shelf-stable mousse comprising an aerated oil-in-water emulsion characterised in that the mousse has a storage modulus at 20°C of less than 10,000Pa.

The filling would fill the cavity in the confectionery material. The amount of the mousse used as the filling may vary, although the aim would be to give a noticeable contrast between the coating of the confectionery material and the mousse filling.

The mousse may be filled into the confectionery material using a depositor, one example being described in WO2005063036 using a vertical motion to follow the deposit and break the tail at completion of depositing.

The product of the present invention may have a shelf life of approximately 12 months.

### Examples

The following Examples further describe the present invention.

### Example 1

A fat phase is prepared by mixing the following ingredients in the proportions indicated and heating to 50°C:

| | % |
|---|---|
| Soft fat | 45 |
| Low fat cocoa powder | 15 |
| Dark Chocolate | 40 |

A water phase is prepared by mixing the following ingredients in the proportions indicated and heating to 90°C:

| | % |
|---|---|
| Skimmed milk powder | 15 |
| 63DE Corn Syrup | 35 |
| Sorbitol (powder) | 20 |
| Sucrose | 14.4 |
| Sucrose ester | 0.6 |
| Water | 15 |

Both phases are then cooled to 35°C. The oil phase is added slowly to an equal amount of the water phase at a rate that allows sufficient time and agitating using a Silverson high shear batch mixer to form an emulsion. For example, for a 240kg batch, the 120kg of oil phase would be added over approximately 10 minutes.

After the emulsion has formed, it is transferred to a vessel and held in the vessel with stirring using a gate-arm mixer and then fed to a Mondomix aeration machine in which aeration is carried out by injecting nitrogen through the flowing emulsion under pressure at a flow rate suitable to form a shelf stable mousse having a density of 0.85g/cm³ and a fat content of 29%.

The mousse has a light tender texture and is firmer than a traditional mousse au chocolat. The maximum penetration force is 0.7N. It provides an intense chocolate mousse release very similar to traditional mousse au chocolat.

### Example 2

30 parts of the oil phase prepared as in Example 1 is added slowly to 70 parts of the water phase prepared as in Example 1 at a rate that allows sufficient time and agitating using a Silverson high shear batch mixer to form an emulsion.

After the emulsion has formed, it is transferred to a vessel and held in the vessel with stirring using a gate-arm mixer and then fed to a Mondomix aeration machine in which aeration is carried out by injecting nitrogen through the flowing emulsion at a flow rate suitable to form a shelf stable mousse having a density of 0.80g/cm³ and a fat content of 18%.

The mousse has a light tender texture and is firmer than a traditional mousse au chocolat. The maximum penetration force is 0.3N. It provides an intense chocolate mousse flavour release very similar to traditional mousse au chocolat.

### Example 3

A water phase is prepared by mixing the following ingredients in the proportions indicated and heating to 90°C:

| | % |
|---|---|
| Skimmed milk powder | 9.0 |
| 63DE Corn Syrup | 18.8 |
| Sorbitol (powder) | 18.8 |
| Sucrose | 13.0 |
| Glycerol | 12.0 |
| Fructose | 9.0 |
| Dextrose monohydrate | 6.0 |
| Sucrose ester | 0.4 |
| Water | 13.0 |

50 parts of the oil phase prepared as in Example 1 is added slowly to 50 parts of the water phase prepared as above at a rate that allows sufficient time and agitating using a Silverson high shear batch mixer to form an emulsion.

After the emulsion has formed, it is transferred to a vessel and held in the vessel with stirring using a gate-arm mixer and then fed to a Mondomix aeration machine in which aeration is carried out by injecting nitrogen through the flowing emulsion at a flow rate suitable to form a shelf stable mousse having a density of 0.88g/cm³ and a fat content of 29%.

The mousse has a light tender texture and is firmer than a traditional mousse au chocolat. The maximum penetration force is 0.5N. It provides an intense chocolate mousse flavour release very similar to traditional mousse au chocolat, but noticeably sweeter.

### Example 4

For comparison, a traditional mousse au chocolat was prepared using typical domestic kitchen equipment following the instructions printed on the wrapper of a 200g tablet of *Nestlé Dessert chocolat noir.*

The *Nestlé Dessert* chocolate was broken into pieces and melted over a gentle heat with carefully stirring until it was smooth with no lumps. The chocolate was then allowed to cool slightly.

6 eggs were separated and the whites whipped with a pinch of salt until they formed "soft-peaks". The melted chocolate was then gradually added to the egg yolks while they were mixed energetically. The whipped egg whites were gently incorporated into the egg yolk/chocolate mixture to mix them in well but without destroying the egg white foam.

Finally, the mousse was chilled in a refrigerator for 3 hours.

### Example 5

The storage modulii of the mousses prepared in examples 1 - 4 were measured and compared to the mousse component of a number of other commercial products.

A TA Instruments Advanced Rheometer AR1000 rheometer was used to measure storage modulus. Measurements were carried out at 5 °C for refrigerated desserts and 20 °C for all other products, the temperature being controlled by Peltier effect.

A gap of 1 000 micrometers was fixed between the measuring plates using a TA Instruments 2 cm steel flat plate geometry. Prior to the stress sweep measurement the sample was left equilibrating for 1 min. The measurement was carried out at an angular frequency of 10 rad/s (= 1.59 Hz), and 5 points measured per decade. The stress increments were done in log mode.

The G' value of the linear plateau region is taken from a standard Linear Visco-Elastic Plateau determination curve. The water activities of the mousse materials at 25°C were also measured, using a Novasina Aw Sprint TH500.

The results are shown in the following Table 1.

**Table 1**

| Product | Storage Modulus G' (Pa) | G' measurement temperature | Water Activity |
|---|---|---|---|
| *Camille Bloch Mousse Chocol a t* | 6,000,000 | 20 °C | <0.40 |
| *Cadbury Dairy Milk Mousse with Bourneville* | 2,000,000 | 20 °C | 0.67 |
| NESTLÉ *La laitière Secret de mousse Chocolat* | 3,500 | 5 °C | 0.98 |
| Mousse of Example 1 | 4,000 | 20 °C | 0.64 |
| Mousse of Example 2 | 5,000 | 20 °C | 0.67 |
| Mousse of Example 3 | 4,000 | 20 °C | 0.51 |
| Mousse of Example 4 | 1,000 | 5 °C | 0.97 |

All the comercial products were purchased in France apart from the *Cadbury Dairy Milk Mousse with Bourneville* which was purchased in South Africa.

## Claims

1. A shelf-stable mousse comprising an aerated oil-in-water emulsion **characterised in that** the weight ratio of oil phase:water phase varies from 25:75 to 60:40, and the mousse has a storage modulus at 20°C of less than 10,00OPa.

2. A shelf-stable mousse according to claim 1 wherein the weight ratio of oil phase:water phase varies from 30:70 to 55:45.

3. A shelf-stable mousse according to claim 1 wherein the oil phase consists of 100% by weight fat.

4. A shelf-stable mousse according to claim 1 wherein for a chocolate flavoured mousse, the oil phase contains a mixture of soft fat, plain chocolate and cocoa powder.

5. A shelf-stable mousse according to claim 1 wherein for a chocolate flavoured mousse, the oil phase contains from 35-50% by weight of soft fat, from 20-50% by weight of plain chocolate and from 0-30% by weight of cocoa powder.

6. A shelf-stable mousse according to claim 1 wherein for a chocolate flavoured mousse the oil phase contains the constituents of chocolate.

7. A shelf-stable mousse according to claim 1 wherein for flavoured mousses other than chocolate, the oil phase contains a suitable fat or fat blend with milk powder or fruit powder.

8. A shelf-stable mousse according to claim 1 wherein for a nut flavoured mousse, the oil phase contains ground nuts and/or pieces of nut and optionally chocolate.

9. A shelf-stable mousse according to claim 1 wherein the water phase contains a mixture of sugars and/or sugar alcohols together with a surfactant and water.

10. A shelf-stable mousse according to claim 9 wherein the surfactant comprises whey protein, egg white, casein hydrolysate or mixtures of these, skimmed milk powder, sucrose esters of fatty acids, citric acid esters of monoglycerides, diacetyl tartaric acid esters of monoglycerides, polysorbates, lactic acid esters of monoglycerides, propylene glycol, propylene glycol esters of fatty acids either alone or any combination of two or more thereof.

11. A shelf-stable mousse according to claim 9 wherein the mixture of sugars or sugar alcohols is corn syrup, sucrose, maltitol syrup, polydextrose, dextrins, inulin, sorbitol, glycerol, fructose and dextrose or mixtures of any two or more thereof.

12. A shelf-stable mousse according to claim 1 which has a water activity (Aw) of less than 0.67.

13. A shelf-stable mousse according to claim 1 which has a water activity (Aw) of less than 0.60.

14. A shelf-stable mousse according to claim 1 which has a water activity (Aw) of from 0.20 to 0.55.

15. A shelf-stable mousse according to claim 1 which contains no preservative.

16. A shelf-stable mousse according to claim 1 which has a fruit, nut, mint, coffee, caramel, dulce de leche, or chocolate flavour.

17. A process of preparing a shelf-stable mousse as claimed in claim 1 which comprises preparing the oil phase and the water phase separately, combining the oil phase and the water phase at the weight ratio of oil phase:water phase from 25:75 to 60:40, and aerating the mixture.

18. A process of preparing a shelf-stable mousse as claimed in claim 17 which comprises preparing the oil phase and the water phase separately, heating the water phase to a temperature above 85°C; heating the oil phase to a temperature above the melting temperature of the fat; cooling both phases to a temperature below 40°C; adding the oil phase to the water phase at a rate that allows sufficient time and with sufficient agitation to form an emulsion, and aerating the emulsion.

19. A process according to claim 17 or claim 18 wherein, for a chocolate flavoured mousse, the oil phase before mixing with the water phase contains from 35-50% by weight of soft fat, from 20-50% by weight of plain chocolate and from 0-30% of cocoa powder.

20. A process according to claim 17 or claim 18 wherein, for a chocolate flavoured mousse, the water phase before mixing with oil phase contains from 0-30% by weight surfactant, 0-40% by weight sugar alcohol, 0-70% by weight sugar, and from 1-30% by weight added water.

21. A process according to claim 17 or claim 18 wherein, before mixing, the ingredients of the water phase are heated to a temperature for pasteurisation, and the ingredients of the oil phase are heated to the melting temperature of the fat.

22. A confectionery product comprising a confectionery material having a filling of a shelf-stable mousse comprising an aerated oil-in-water emulsion **characterised in that** the weight ratio of oil phase:water phase varies from 25:75 to 60:40, and the mousse has a storage modulus at 20°C of less than 10,000Pa.

23. A confectionery product according to claim 22 wherein the confectionery material is chocolate, cake or biscuits.

24. A process of preparing a confectionery product as claimed in claim 22 which comprises filling the mousse into the confectionery material using a depositor.

## Patentansprüche

1. Haltbare Mousse, aufweisend eine Öl-in-Wasser Emulsion mit Luftzuschlag, **dadurch gekennzeichnet, dass** das Gewichtsverhältnis der Ölphase zu der Wasserphase zwischen 25:75 und 60:40 liegt, und dass die Mousse bei 20°C ein Speichermodul von weniger als 10.000Pa aufweist.

2. Haltbare Mousse nach Anspruch 1, wobei das Gewichtsverhältnis der Ölphase zu der Wasserphase zwischen 30 : 70 und 55 : 45 liegt.

3. Haltbare Mousse nach Anspruch 1, wobei die Ölphase zu 100 Gew.-% aus Fett besteht.

4. Haltbare Mousse nach Anspruch 1, wobei für ein Mousse mit Schokoladengeschmack die Ölphase eine Mischung aus weichem Fett, Bitterschokolade und Kakaopulver beinhaltet.

5. Haltbare Mousse nach Anspruch 1, wobei für ein Mousse mit Schokoladengeschmack die Ölphase zwischen 35 - 50 Gew.-% weiches Fett, zwischen 20 - 50 Gew.-% Bitterschokolade und zwischen 0 - 30 Gew.-% Kakaopulver beinhaltet.

6. Haltbare Mousse nach Anspruch 1, wobei für ein Mousse mit Schokoladengeschmack die Ölphase die Schokoladenbestandteile beinhaltet.

7. Haltbare Mousse nach Anspruch 1, wobei für Mousse mit einem anderen Geschmack als Schokolade die Ölphase ein geeignetes Fett oder Fettgemisch mit Milchpulver oder Fruchtpulver enthält.

8. Haltbare Mousse nach Anspruch 1, wobei für ein Mousse mit Nussgeschmack die Ölphase Erdnüsse und /oder Nussstücke und optional Schokolade enthält.

9. Haltbare Mousse nach Anspruch 1, wobei die Wasserphase eine Mischung aus Zucker und/oder Zuckeralkohol zusammen mit einem Netzmittel und Wasser beinhaltet.

10. Haltbare Mousse nach Anspruch 9, wobei das Netzmittel aufweist Molkeprotein, Eiweiß, Casein-Hydrolysat oder Mischungen davon, Magermilchpulver, Saccharoseester von Fettsäuren, Zitronensäureester von Monoglyceriden, Diacetylweinsäureester von Monoglyceriden, Polysorbate, Milchsäureester von Monoglyceriden, Propylenglykol, Propylenglykolester von Fettsäuren, entweder einzeln, oder jegliche Kombination von zweien oder mehreren davon.

11. Haltbare Mousse nach Anspruch 9, wobei die Mischung aus Zucker oder Zuckeralkoholen Maissirup, Saccharose, Maltitsirup, Polydextrose, Dextrine, Inulin, Sorbitol, Glyzerol, Fruktose und Dextrose oder Mischungen von zwei beliebigen oder mehreren davon ist.

12. Haltbare Mousse nach Anspruch 1, mit einer Wasseraktivität (Aw) von weniger als 0,67.

13. Haltbare Mousse nach Anspruch 1, mit einer Wasseraktivität (Aw) von weniger als 0,60.

14. Haltbare Mousse nach Anspruch 1, mit einer Wasseraktivität (Aw) zwischen 0,20 bis 0,55.

15. Haltbare Mousse nach Anspruch 1, welche keine Konservierungsmittel enthält.

16. Haltbare Mousse nach Anspruch 1, aromatisiert mit einem Frucht-, Nuss-, Minze, Kaffee, Karamell-, Dulce de Leche-, oder Schokoladengeschmack.

17. Verfahren zur Herstellung einer haltbaren Mousse nach Anspruch 1, welches aufweist die Herstellung der Ölphase und der Wasserphase getrennt voneinander, Mischen der Ölphase und der Wasserphase im Gewichtsverhältnis Ölphase : Wasserphase von 25 : 75 bis zu 60 : 40, und Luftzuschlag der Mischung.

18. Verfahren zur Herstellung einer haltbaren Mousse nach Anspruch 17, welches aufweist die Herstellung der Ölphase und der Wasserphase getrennt voneinander, Erhitzen der Wasserphase auf eine Temperatur über 85°C; Erhitzen der Ölphase auf eine Temperatur oberhalb der Schmelztemperatur des Fettes; Abkühlung beider Phasen auf eine Temperatur unter 40°C; Zugabe der Ölphase zu der Wasserphase , in einem Maße, das erlaubt bei hinreichender Zeit und hinreichender Bewegung eine Emulsion zu bilden, und Luftzuschlag der Emulsion.

19. Verfahren nach Anspruch 17 oder Anspruch 18, wobei für eine Mousse mit Schokoladengeschmack die Ölphase bevor sie mit der Wasserphase vermischt wird, von 35 - 50 Gew.-% weiches Fett, von 20 - 50 Gew.-% Zartbitterschokolade und von 0 - 30 Gew.-% Kakaopulver beinhaltet.

20. Verfahren nach Anspruch 17 oder Anspruch 18, wobei für eine Mousse mit Schokoldaengeschmack die Wasserphase, bevor sie mit der Ölphase vermischt wird, zwischen 0 -30 Gew.-% Netzmittel, 40 Gew.-% Zuckeralkohol, 0 - 70 Gew.-% Zucker und von 1 - 30 Gew.-% zugeführtes Wasser aufweist.

21. Verfahren nach Anspruch 17 oder Anspruch 18, wobei vor dem Mischen die Zutaten der Wasserphase auf die Temperatur zur Pasteurisierung erhitzt werden und die Zutaten der Ölphase auf die Schmelztemperatur des Fettes erhitzt werden.

22. Süßwarenprodukt aufweisend Süßwarenmaterial mit einer Füllung aus einer haltbaren Mousse, aufweisend eine Öl-in-Wasser-Emulsion mit Luftzuschlag, **dadurch gekennzeichnet,**
**dass** das Gewichtsverhältnis von Ölphase:Wasserphase von 25 : 75 bis 60 : 40 beträgt und die Mousse bei 20 °C ein Speichermodul von weniger als 10000 Pa aufweist.

23. Süßwarenprodukt nach Anspruch 22, wobei das Süßwarenmaterial Schokolade, Kuchen oder Biskuit ist.

24. Verfahren zur Zubereitung eines Süßwarenprodukts nach Anspruch 22, aufweisend das Einfüllen der Mousse in das Süßwarenmaterial unter Verwendung eines Depositors.

## Revendications

1. Mousse de longue conservation comprenant une émulsion huile-dans-l'eau aérée **caractérisée en ce que** le rapport en poids de la phase huileuse sur la phase aqueuse varie de 25:75 à 60:40, et la mousse présente un module de stockage à 20°C de moins de 10000 Pa.

2. Mousse de longue conservation selon la revendication 1 dans laquelle le rapport en poids de phase huileuse sur la phase aqueuse varie de 30:70 à 55:45.

3. Mousse de longue conservation selon la revendication 1 dans laquelle la phase huileuse est constituée de 100% en poids de matière grasse.

4. Mousse de longue conservation selon la revendication 1 dans laquelle pour une mousse aromatisée au chocolat, la phase huileuse contient un mélange de matière grasse molle, de chocolat noir et de poudre de cacao.

5. Mousse de longue conservation selon la revendication 1 dans laquelle pour une mousse aromatisée au chocolat, la phase huileuse contient de 35 à 50% en poids de matière grasse molle, de 20 à 50% en poids de chocolat noir et de 0 à 30% en poids de poudre de cacao.

6. Mousse de longue conservation selon la revendication 1 dans laquelle pour une mousse aromatisée au chocolat, la phase huileuse contient les constituants du chocolat.

7. Mousse de longue conservation selon la revendication 1 dans laquelle pour des mousses aromatisées à autre chose qu'au chocolat, la phase huileuse contient une matière grasse appropriée ou un mélange de matière grasse avec de la poudre de lait ou de la poudre de fruits.

8. Mousse de longue conservation selon la revendication 1 dans laquelle pour une mousse aromatisée à un fruit à coque, la phase huileuse contient des fruits à coque broyés et/ou des morceaux de fruits à coque et optionnellement du chocolat.

9. Mousse de longue conservation selon la revendication 1 dans laquelle la phase aqueuse contient un mélange de sucres et/ou des alcools de sucres avec un agent tensioactif et de l'eau.

10. Mousse de longue conservation selon la revendication 9 dans laquelle l'agent tensioactif comprend de la protéine de lactosérum, blanc d'oeuf, hydrolysat de caséine ou mélanges de ceux-ci, poudre de lait écrémé, esters de saccharose d'acides gras, esters d'acide citrique de monoglycérides, esters d'acide diacétyl tartriques de monoglycérides, polysorbates, esters d'acide lactique de monoglycérides, propylène glycol, esters de propylène glycol d'acides gras, soit seul(s) soit sous forme d'une combinaison de deux ou plusieurs de ceux-ci.

11. Mousse de longue conservation selon la revendication 9 dans laquelle le mélange de sucres ou d'alcools de sucre est du sirop de malt, saccharose, sirop de maltitol, polydextrose, dextrines, inuline, sorbitol, glycérol, fructose et dextrose ou mélanges de deux éléments quelconques de ceux-ci ou plus.

12. Mousse de longue conservation selon la revendication 1 qui présente une activité de l'eau (Aw) de moins de 0,67.

13. Mousse de longue conservation selon la revendication 1 qui présente une activité de l'eau (Aw) de moins de 0,60.

14. Mousse de longue conservation selon la revendication 1 qui présente une activité de l'eau (Aw) compris entre 0,20 et 0,55.

15. Mousse de longue conservation selon la revendication 1 qui ne contient aucun agent de conservation.

16. Mousse de longue conservation selon la revendication 1 qui présente un fruit, un fruit à coque, de la menthe, du café, du caramel, du dulce de leche, ou de l'arôme de chocolat.

17. Procédé de préparation d'une mousse de longue conservation telle que revendiquée dans la revendication 1 qui comprend la préparation de la phase huileuse et de la phase aqueuse séparément, la combinaison de la phase huileuse et de la phase aqueuse selon un rapport en poids de phase huileuse sur phase aqueuse de 25:75 à 60:40, et l'aération du mélange.

18. Procédé de préparation d'une mousse de longue conservation telle que revendiquée dans la revendication 17 qui comprend la préparation de la phase huileuse et de la phase aqueuse séparément, le chauffage de la phase aqueuse à une température supérieure à 85°C ; le chauffage de la phase huileuse à une température supérieure à la température de fusion de la matière grasse ; le refroidissement des deux phases à une température inférieure à 40°C ; l'ajout de la phase huileuse à la phase aqueuse à une vitesse qui accorde un temps suffisant et avec une agitation suffisante pour former une émulsion, et l'aération de l'émulsion.

19. Procédé selon la revendication 17 ou la revendication 18 dans lequel, pour une mousse aromatisée au chocolat, la phase huileuse contient avant le mélange avec la phase aqueuse de 35 à 50% en poids de matière grasse molle, de 20 à 50% en poids de chocolat noir et de 0 à 30% en poids de poudre de cacao.

20. Procédé selon la revendication 17 ou la revendication 18 dans lequel, pour une mousse aromatisée au chocolat, la phase aqueuse comprend avant le mélange avec la phase huileuse de 0 à 30% en poids d'agent tensioactif, de 0 à 40% en poids d'alcool de sucre, de 0 à 70 en poids de sucre et de 1 à 30% en poids d'eau ajoutée.

21. Procédé selon la revendication 17 ou la revendication 18 dans lequel, avant le mélange, les ingrédients de la phase aqueuse sont chauffés à une température destinée à la pasteurisation, et les ingrédients de la phase huileuse sont chauffés à la température de fusion de la matière grasse.

22. Produit de confiserie comprenant une matière de confiserie présentant un fourrage d'une mousse de longue conservation comprenant une émulsion huile-dans-l'eau aérée **caractérisé en ce que** le rapport en poids de phase huileuse sur phase aqueuse varie de 25:75 à 60:40, et la mousse présente un module de stockage à 20°C de moins de 10000 Pa.

23. Produit de confiserie selon la revendication 22 dans lequel la matière de confiserie est du chocolat, du gâteau ou des biscuits.

24. Procédé de préparation d'un produit de confiserie tel que revendiqué dans la revendication 22 qui comprend le remplissage de la mousse à l'intérieur de la matière de confiserie en utilisant un dispositif de dépôt.
